# EUROPEAN PATENT APPLICATION

(11) **EP 4 468 787 A1**
(43) Date of publication of application: **27.11.2024**
(21) Application number: 22920349.2
(22) Date of filing: 17.01.2022
(51) Int. Cl.: H04W 48/16, H04W 16/26, H04W 84/06

(54) **TERMINAL, AND COMMUNICATION METHOD**

(71) Applicant: NTT DOCOMO, INC., Tokyo 100-6150 (JP)
(72) Inventor: KUMAGAI, Shinya, Tokyo 100-6150 (JP); OKANO, Mayuko, Tokyo 100-6150 (JP); TAKAHASHI, Yuki, Tokyo 100-6150 (JP); OKAMURA, Masaya, Tokyo 100-6150 (JP); YOSHIOKA, Shohei, Tokyo 100-6150 (JP); NAGATA, Satoshi, Tokyo 100-6150 (JP)
(74) Representative: Hoffmann Eitle
(86) International application number: PCT/JP2022/001477
(87) International publication number: WO 2023/135824

(57) **Abstract**

A terminal includes: a communication unit configured to perform transmission and reception of a signal with a base station included in an NTN (Non-Terrestrial Network) via a non-terrestrial device; and a control unit configured to determine which of a first link directly connected to the terminal itself from the non-terrestrial device or a second link connected to the terminal itself from the non-terrestrial device via a wireless relay device is to be used for transmission or reception of the signal.

## Description

### FIELD OF THE INVENTION

The present invention relates to a terminal and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

Currently, NTN (Non-Terrestrial Network) is being discussed. The NTN provides services to an area that cannot be covered by a terrestrial 5G network mainly due to the cost aspect, by using a non-terrestrial network such as a satellite (Non-Patent Document 2 and Non-Patent Document 3).

In addition, in the next generation communication, the high frequency band is expected to be used. From the viewpoint of the reduced number of scatterers, reduced shadowing effects, increased distance attenuation, or the like, due to the characteristics of the high frequency band, the communication quality is required to be improved. The beam control, environment, and the like, for ensuring the communication quality are expected to be required.

For example, there is a problem of easily created dead zones because of the radio waves' strong tendency of traveling straight in the high frequency band. Accordingly, methods of improving the communication quality under the multi-path environment have been discussed, the methods using a passive repeater or an active type reflector (RIS: Reconfigurable Intelligent Surface), a smart repeater that receives and amplifies a signal to be re-radiated, and the like (for example, Non-Patent Document 4).

### Citation List

### Non-Patent Document

Non-Patent Document 1: 3GPP TS 38.300 V16.8.0 (2021-12)
Non-Patent Document 2: 3GPP TR 38.821 V16.0.0 (2019-12)
Non-Patent Document 3: Konishi, et al., "A Study of Downlink Spectrum Sharing in HAPS Mobile Communication System", The Institute of Electronics, Information and Communication Engineers (IEICE) General Conference, B-17-1, 2020
Non-Patent Document 4: NTT DOCOMO, "White Paper 5G Evolution and 6G"(2021-02, Version 3.0, Internet<URL:https://www.nttdocomo.co.jp/binary/pdf/corporate/technology/whitepape r_6g/DOCOMO_6G_White_PaperJP_20210203.pdf>

### SUMMARY OF THE INVENTION

### TECHNICAL PROBLEM

In the NTN that provides communications via a smart repeater, an environment can be assumed in which there is a service link by which a satellite and a terminal are directly connected to each other without involving a smart repeater in addition to a service link involving a smart repeater. In the environment, an appropriate service link is required to be used.

The present invention has been made in view of the above points, and it is an object of the present invention to determine a service link to be used in the NTN (Non-Terrestrial Network) system.

### SOLUTION TO PROBLEM

According to the disclosed technique, a terminal is provided. The terminal includes: a communication unit configured to perform transmission and reception of a signal with a base station included in an NTN (Non-Terrestrial Network) via a non-terrestrial device; and a control unit configured to determine which of a first link directly connected to the terminal itself from the non-terrestrial device or a second link connected to the terminal itself from the non-terrestrial device via a wireless relay device is to be used for transmission or reception of the signal.

### ADVANTAGEOUS EFFECTS OF INVENTION

According to the disclosed technique, it is possible to determine a service link to be used in the NTN (Non-Terrestrial Network) system.

### BRIEF DESCRIPTION OF THE DRAWINGS

[Fig. 1] is a drawing illustrating an example (1) of an NTN.
[Fig. 2] is a drawing illustrating an example (2) of an NTN.
[Fig. 3] is a drawing illustrating an example (3) of an NTN.
[Fig. 4] is a drawing illustrating an example (4) of an NTN.
[Fig. 5] is a drawing illustrating an example of NTN in an embodiment of the present invention.
[Fig. 6] is a drawing illustrating an example of a functional configuration of a base station 10 in an embodiment of the present invention.
[Fig. 7] is a drawing illustrating an example of a functional configuration of a terminal 20 in an embodiment of the present invention.
[Fig. 8] is a drawing illustrating an example of a functional configuration of a wireless relay device 30 in an embodiment of the present invention.
[Fig. 9] is an operation example of a wireless relay device 30 in an embodiment of the present invention.
[Fig. 10] is a drawing illustrating an example of a communication in the high frequency band.
[Fig. 11] is a drawing illustrating an example of a reflection type wireless relay device 30 in an embodiment of the present invention.
[Fig. 12] is a drawing illustrating an example of a transparent transmission type wireless relay device 30 in an embodiment of the present invention.
[Fig. 13] is a drawing illustrating an example of a communication in an embodiment of the present invention.
[Fig. 14] is a drawing illustrating an example of a hardware structure of the base station 10, the terminal 20, or the wireless relay device 30 in an embodiment of the present invention.
[Fig. 15] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, the above terms in NR correspond to NR-SS, NR-PSS, NR-SSS, NR-PBCH, NR-PRACH, NR-PDCCH, NR-PDSCH, NR-PUCCH, NR-PUSCH, and the like. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

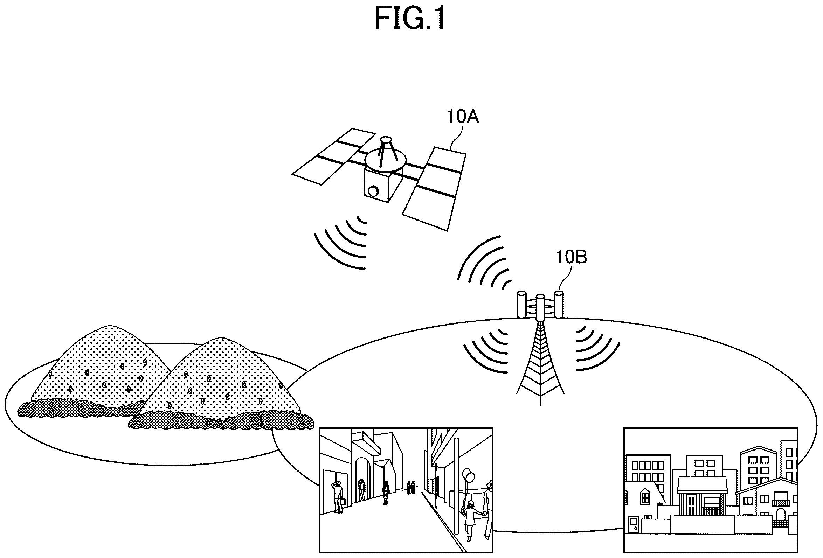

Fig. 1 is a drawing illustrating an example (1) of NTN. The NTN provides services to an area that cannot be covered by a terrestrial 5G network mainly due to the cost aspect, by using a non-terrestrial device such as a satellite. Further, services with higher reliability may be provided by NTN. For example, NTN may be assumed to be applied to IoT (Inter of things), ships, buses, trains, and critical communications. Further, NTN has scalability according to efficient multi-cast or broadcast.

As an example of NTN, as illustrated in Fig. 1, a satellite 10A can provide services to an area such as a mountainous area in which a terrestrial base station is not arranged, by performing retransmission of a signal transmitted by a terrestrial base station 10B.

Note that the terrestrial 5G network may have a structure as described below. The terrestrial 5G network may include one or more base stations 10 and terminals 20. The base station 10 is a communication device that provides one or more cells and performs wireless communication with the terminal 20. Physical resources of the radio signal may be defined in the time domain and the frequency domain, the time domain may be defined by the number of OFDM symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information.

The base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, both the base station 10 and terminal 20 may perform communications via an SCell (Secondary Cell) and a PCell (Primary Cell) using CA (Carrier Aggregation).

The terminal 20 may be a communication apparatus that includes a wireless communication function such as a smartphone, a mobile phone, a tablet, a wearable terminal, a communication module for M2M (Machine-to-Machine), or the like. The terminal 20 uses various communication services provided by a wireless communication system, by receiving a control signal or data in DL from the base station 10 and transmitting a control signal or data in UL to the base station 10.

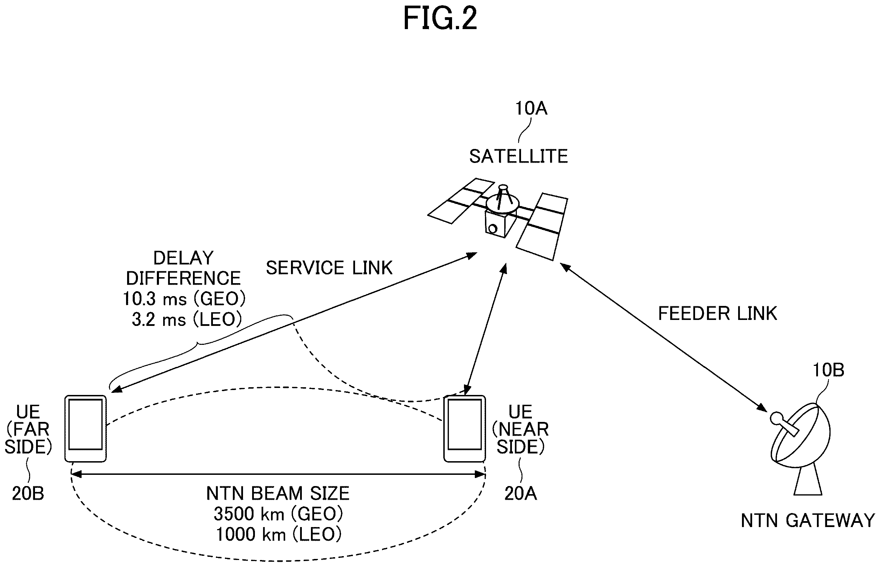

Fig. 2 is a drawing illustrating an example (2) of NTN. In NTN, a cell or an area for each beam is very large when compared with a terrestrial network, TN. Fig. 2 illustrates an example of NTN including retransmissions by a satellite. The connection between a satellite 10A and an NTN gateway 10B is referred to as a feeder link, and the connection between the satellite 10A and a UE 20 is referred to as a service link.

As illustrated in Fig. 2, the delay difference between the near side UE 20A and the far side UE 20B is, for example, 10.3 ms in a case of GEO (Geosynchronous orbit), and 3.2 ms in a case of LEO (Low Earth orbit). Further, the beam size in NTN is, for example, 3,500 km in a case of GEO, and 1,000 km in a case of LEO.

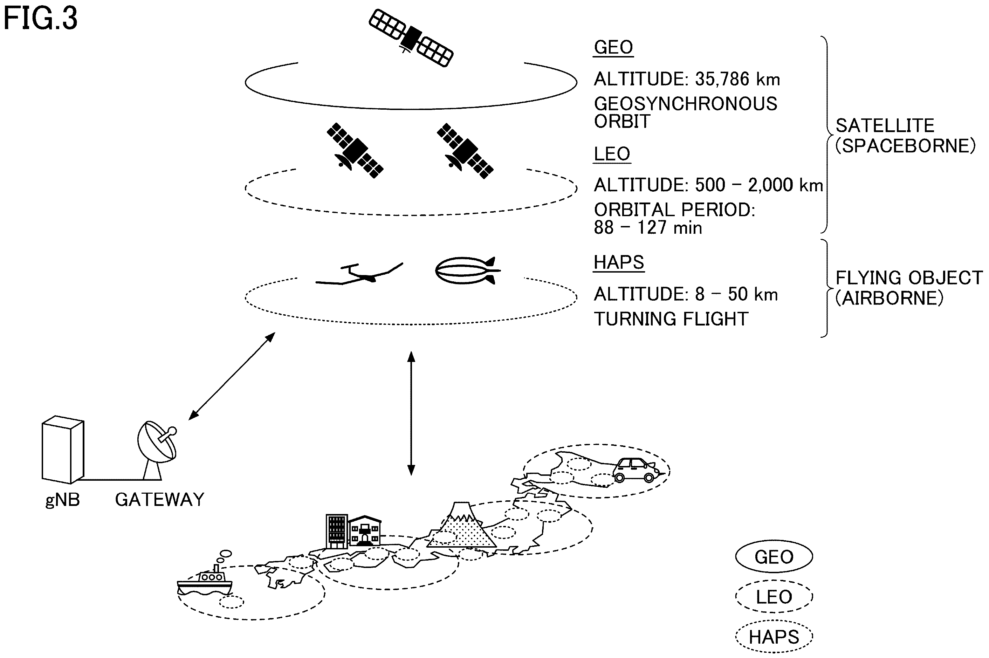

Fig. 3 is a drawing illustrating an example (3) of NTN. As illustrated in Fig. 3, NTN is implemented by a satellite in space or a flying object in the air. For example, the GEO satellite may be a satellite located at an altitude 35,786 km, with a geosynchronous orbit. For example, the LEO satellite may be a satellite located at an altitude 500 to 2,000 km, with an orbital period of 88 to 127 minutes. For example, HAPS (High Altitude Platform Station) may be a flying object located at an altitude 8 to 50 km that flies on a circular flight path.

As illustrated in Fig. 3, the GEO satellite, the LEO satellite and the HAPS flying object may be connected to a terrestrial station gNB via a gateway. In addition, the service area increases in the order of HAPS, LEO, and GEO.

For example, the coverage of the 5G network can be enhanced by NTN, with respect to the area with no service and the area with services. In addition, for example, the continuity, availability, and reliability of services in the ship, bus, train or other important communications can be improved by NTN. Note that NTN may be indicated by transmitting a dedicated parameter to the terminal 20, and the dedicated parameter may be, for example, a parameter related to TA (Timing Advance) determination based on the information related to the satellite or the flying object.

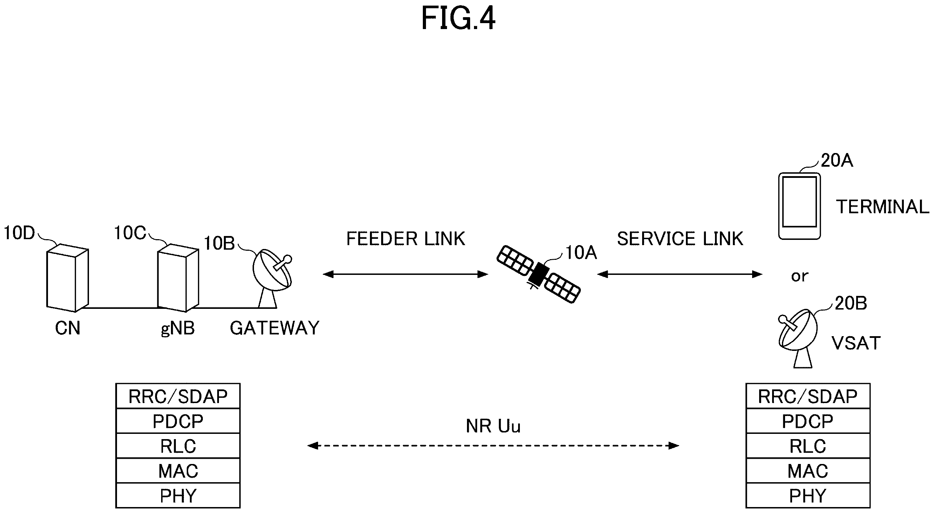

Fig. 4 is a drawing illustrating an example (4) of NTN. Fig. 4 illustrates an example of an NTN network architecture that is assumed in a case of transparent payload. As illustrated in Fig. 4, a CN (Core Network) 10D, a gNB 10C and a gateway 10B are connected. The gateway 10B is connected to a satellite 10A via a feeder link. The satellite 10A is connected to a terminal 20A or a VSAT (Very small aperture terminal) 20B via a service link. NR Uu is established between the gNB 10C and the terminal 20A or VSAT 20B.

In addition, as an assumption of the NTN network architecture, FDD may be adopted, or TDD may be available. In addition, the terrestrial cell may be fixed or movable. In addition, the terminal 20 may have GNSS (Global Navigation Satellite System) capability. For example, in FR1, a hand-held device with power class 3 may be assumed. In addition, a VSAT device may be assumed to be at least in FR2.

In addition, a regenerative payload may be assumed in the NTN network architecture. For example, a gNB function may be installed in the satellite or the flying object. In addition, a gNB-DU may be installed in the satellite or the flying object, and a gNB-CU may be arranged as a terrestrial station.

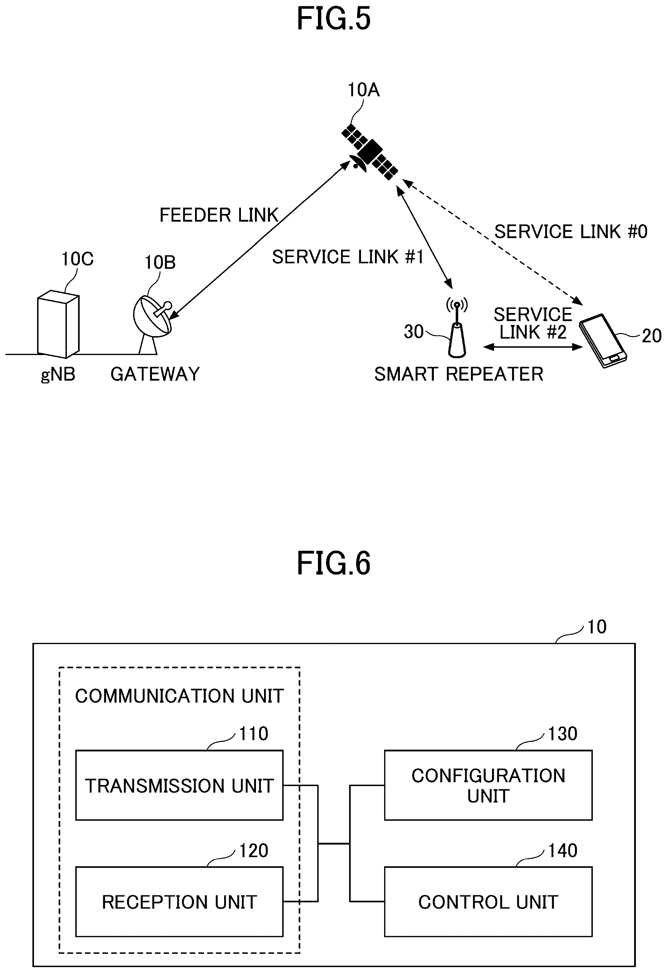

Fig. 5 is a drawing illustrating an example of NTN in an embodiment of the present invention. In the future network, a more flexible NTN structure is expected. For example, as illustrated in Fig. 5, a gNB 10C and a terminal 20 may perform communication via a smart repeater 30. As illustrated in Fig. 5, a service link #1 between a satellite 10A and the smart repeater 30 and a service link #2 between the smart repeater 30 and the terminal 20 may be configured. In addition, a service link #0 between the satellite 10A and the terminal 20 may be configured depending on the necessity.

The terminal 20 can reduce the power consumption because the terminal 20 performs communication using power only required for reaching the smart repeater 30. For example, thanks to the reduced power consumption, an IoT terminal, a RedCap (Reduced capability) terminal, and the like, can use the NTN.

Here, the smart repeater 30 may be referred to as a wireless relay device 30. The wireless communication system in an embodiment of the present invention may include a wireless relay device 30. In an embodiment of the present invention, as an example, the wireless relay device 30 may be a reflector (RIS), a phase control reflector, a passive repeater, an IRS (Intelligent Reflecting Surface), or the like. As a specific example, the reflector (RIS: Reconfigurable Intelligent Surface) may be what is called a meta-material reflector, a dynamic meta surface, a meta-surface lens, or the like (for example, Non-Patent Document 4).

In an embodiment of the present invention, the wireless relay device 30 relays a wireless signal transmitted from a base station 10A, for example. In the description of an embodiment of the present invention, "relay" may mean at least one of "reflect", "transparently transmit", "aggregate (collect the radio waves approximately to a point)", or "diffract". The terminal 20 can receive a wireless signal relayed by the wireless relay device 30. In addition, the wireless relay device 30 may relay a wireless signal transmitted from the terminal 20 or may relay a wireless signal transmitted from the base station 10.

As an example, the wireless relay device 30 can change the phase of a wireless signal to be relayed to the terminal 20. From the above-described viewpoint, the wireless relay device 30 may be referred to as a phase variable reflector. It is to be noted that, in an embodiment of the present invention, the wireless relay device 30 may be, but is not limited to, a device having a function of changing the phase of a wireless signal to be relayed. In addition, the wireless relay device 30 may be referred to as a repeater, relay device, reflection array, IRS, transmission array, or the like.

In addition, in an embodiment of the present invention, the wireless relay device 30 including an RIS may be referred to as a battery-less device, meta-material function device, intelligent reflecting surface, smart repeater, or the like. As an example, the wireless relay device 30 including the RIS, smart repeater, or the like, may be defined as a device having a function as described in 1) to 5) below.

1) The device may have a function of receiving a signal transmitted from the base station 10. The signal may be a DL signal such as an SSB (SS/PBCH block), PDCCH, PDSCH, DM-RS (Demodulation Reference Signal), PT-RS (Phase Tracking Reference Signal), CSI-RS (Channel Status Information Reference Signal), RIS dedicated signal, or the like. The device may have a function of receiving a signal carrying information related to a meta-material function. It is to be noted that the device may have a function of transmitting the signal to the terminal 20.
2) The device may have a function of transmitting a signal to the base station 10. The signal may be a UL signal such as a PRACH, PUCCH, PUSCH, DM-RS, PT-RS, SRS, RIS dedicated signal, or the like. The device may have a function of transmitting information related to a meta-material function. It is to be noted that the device may have a function of receiving the signal from the terminal 20.
3) The device may have a function of frame synchronization with the base station 10. It is to be noted that the device may have a function of frame synchronization with the terminal 20.
4) The device may have a function of reflecting a signal transmitted from the base station 10 or the terminal 20. For example, the reflecting function may be a function related to the phase change, or a function related to beam control (for example, a function related to control of TCI (Transmission Configuration Indication) - state, or QCL (Quasi Co Location), selection and application of beams, and selection and application of spatial filters/precoding weights).
5) The device may have a function of changing power of a signal transmitted from the base station 10 or the terminal 20. For example, the function of changing power may be power amplification.

In addition, "receive to transmit" or "relay" in the wireless relay device 30 including a RIS, smart repeater, or the like, may mean to perform transmission including the function A described below but not including the function B described below.
Function A: Applying a phase shifter.
Function B: Not including compensation circuit (for example, amplifying, filtering).

As a different example,
Function A: Applying a phase shifter and compensation circuit.
Function B: Not including frequency conversion.

It is to be noted that the amplitude may be amplified when the phase is changed in the wireless relay device 30 such as an RIS, or the like. In addition, "relaying" in the wireless relay device 30 such as an RIS, or the like, may mean transmitting a received signal as it is without performing a process of layer 2 or layer 3 level, may mean transmitting a received signal as it is in the physical layer level, or may mean transmitting a received signal as it is without interpreting the signal (changing the phase or amplifying the amplitude may be performed).

### (Device configuration)

Next, examples of functional configurations of the base station 10, the terminal 20, and the wireless relay device 30 that perform processing and operations in an embodiment of the present invention will be described. The base station 10, the terminal 20, and the wireless relay device 30 include functions of performing embodiments to be described below. With respect to the above, each of the base station 10, the terminal 20, and the wireless relay device 30 may include only one function among the embodiments.

### <Base station 10>

Fig. 6 is a diagram illustrating an example of a functional configuration of the base station 10. As shown in Fig. 6, the base station 10 includes a transmission unit 110, a reception unit 120, a configuration unit 130, and a control unit 140. The functional configuration illustrated in Fig. 6 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiments.

The configuration unit 130 stores preset configuration information and various configuration information items to be transmitted to the terminal 20 in a storage apparatus and reads the preset configuration information from the storage apparatus as necessary. The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

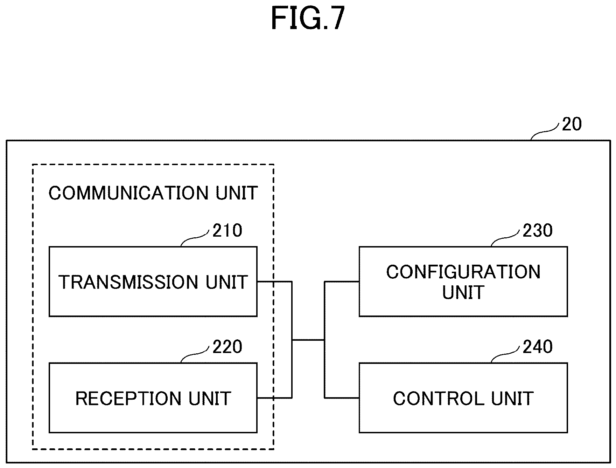

Fig. 7 is a diagram illustrating an example of a functional configuration of the terminal 20. As shown in Fig. 7, the terminal 20 includes a transmission unit 210, a reception unit 220, a configuration unit 230, and a control unit 240. The functional configuration illustrated in Fig. 7 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ (Hybrid automatic repeat request) - ACK, and the reception unit 220 receives configuration information, or the like, described in the embodiments.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### <Wireless relay device 30>

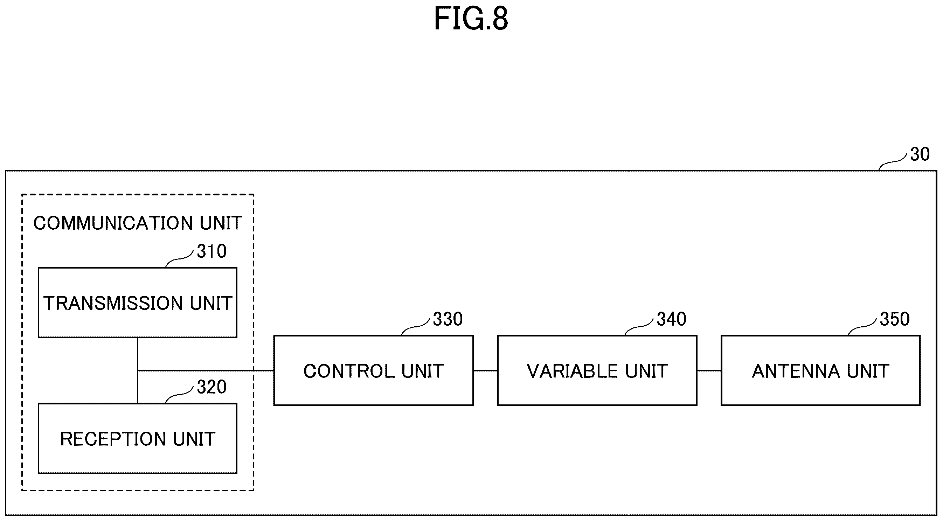

Fig. 8 is a drawing illustrating an example of a functional configuration of a wireless relay device 30 in an embodiment of the present invention. As shown in Fig. 8, the wireless relay device 300 includes a transmission unit 310, a reception unit 320, a control unit 330, a variable unit 340, and an antenna unit 350. Functional divisions and names of functional units may be anything as long as operations according to an embodiment of the present invention can be performed. The transmission unit 310 and the reception unit 320 may be referred to as a communication unit.

The antenna unit 350 includes at least one antenna that is connected to the variable unit 340. For example, the antenna unit 350 may be arranged as an array antenna. In an embodiment of the present invention, the antenna unit 350 may be specifically referred to as a relay antenna. It is to be noted that the variable unit 340 and the antenna unit 350 may be referred to as a relay unit.

The variable unit 340 is connected to the antenna unit 350, and is capable of changing the phase, load, amplitude, or the like. For example, the variable unit 340 may be a variable phase shifter, a phase shifter, an amplifier, or the like. For example, the direction of the radio waves or beams can be changed by changing the phase of the radio waves transmitted from the generation source of the radio waves to the relay antenna.

The control unit 330 is a control means for controlling the variable unit 340. In an embodiment of the present invention, the control unit 330 functions as a control unit for controlling the relaying states at the time when relaying radio waves received from the base station 10 or the terminal 20 without signal interpretation. Here, the control unit 330 may change the relaying state based on the control information received from the base station 10 or the terminal 20 via the communication unit, or may change the relaying state based on the reception state of the radio waves received from the base station 10 or the terminal 20. For example, the control unit 330 may select appropriate (directions of) reception beam and transmission beam and may control the variable unit 340, based on the control information such as an SSB, or the like. Similarly, the control unit 330 may select an appropriate combination of reception direction and transmission direction, according to the reception state, based on the criteria such as the best reception quality or the largest reception power and may control the variable unit 340.

In addition, in an embodiment of the present invention, the control unit 330 can control the variable unit 340, based on, for example, the information related to the propagation path between the terminal 20 or the base station 10A and the antenna unit 350 (hereinafter, including information estimated from the reception state and the control information). For example, the control unit 330 can relay the radio waves received from the base station 10A towards a specific direction of the recipient of the radio waves (in this case, the terminal 20) by using a known method including an active repeater, RIS, or the like, to change the phase without using the transmission power. Specifically, the control unit 330 controls the phase of the wireless signal to be relayed towards the terminal 20 or the base station 10A, based on the estimated propagation path information, H_{PT} and H_{RP}. In other words, according to the same principle as the beamforming, etc., the radio waves can be relayed towards a specific direction by changing the phase of the array antenna, etc. It is to be noted that the wireless relay device 30 only controls (changes) the phase of the wireless signal (radio waves) via the control unit 330, and thus, may perform the relaying without power supply and without performing the power amplification of the wireless signal to be relayed.

In addition, the control unit 330 may obtain the information according to the reception state in an embodiment of the present invention. In addition, the reception unit 320 may obtain control information from the base station 10A or the terminal 20. For example, the reception unit 320 may receive, as the control information, various signals including SSB (including various signals described as an example in the above-described functions) transmitted from the base station 10A or the terminal 20.

In addition, the control unit 330 may estimate the propagation path information (H_{PT} and H_{RP}) between the generation source of the radio waves (for example, the base station 10A or the terminal 20) and the antenna unit 350, based on the reception state (for example, the change of the reception power, or the like) at the time of controlling the variable unit 340.

The propagation path information related to each propagation path (propagation channel information) is specifically information of amplitude or phase and is estimated information with respect to the propagation path of the radio waves arriving at the antenna unit 350 in an embodiment of the present invention. As an example, according to the same principle as the I/Q (In-phase/Quadrature) detection, the control unit 330 may estimate the propagation path information of the antenna unit 350, based on the change of the reception power at the time when the phase of the variable unit 340 of the array-shaped antenna unit 350 is orthogonally switched.

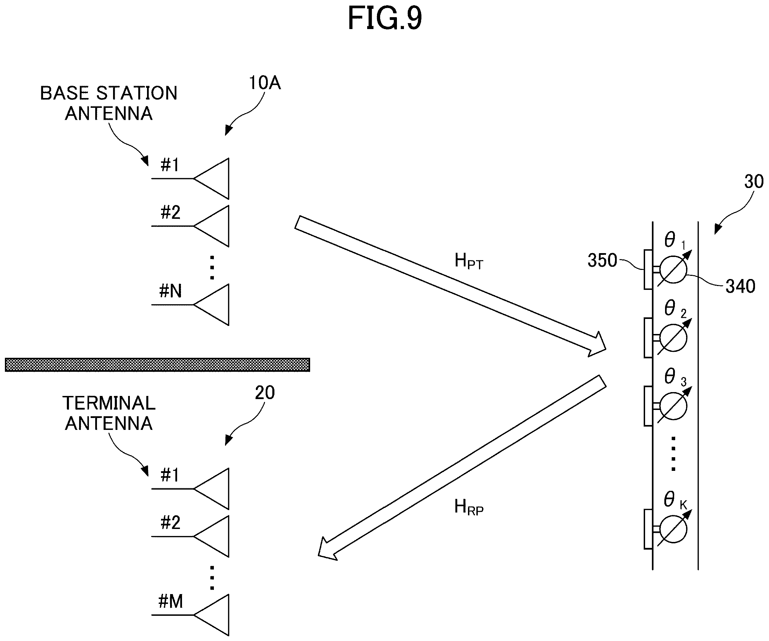

Fig. 9 is an operation example of a wireless relay device 30 in an embodiment of the present invention. As illustrated in Fig. 9, as an example, the wireless relay device 30 is located between the base station 10A (may be another base station 10, or the like) and the terminal 20, and relays (reflects, transparently transmits, collects, diffracts) a wireless signal transmitted and received between the base station 10A and the terminal 20.

As a specific example, in a case where the wireless quality is good, the base station 10A and the terminal 20 directly transmit and receive a wireless signal without involving the wireless relay device 30. On the other hand, in a case where the wireless quality is degraded, for example, where there is an obstruction between the base station 10A and the terminal 20, the wireless relay device 30 relays a wireless signal transmitted and received between the base station 10A and the terminal 20.

Specifically, the wireless relay device 30 estimates the propagation path information, HPT and HRT, between the generation source such as the base station 10A or the terminal 20 and the relay antenna, based on the change of the reception power at the time of controlling the variable unit 340 such as a variable phase shifter. In addition, the wireless relay device 30 relays a wireless signal towards the recipient of the radio waves such as the terminal 20, by controlling the variable unit 340 such as a variable phase shifter, based on the estimated propagation path information. It is to be noted that the wireless relay device 30 may relay a wireless signal towards the recipient of the radio waves such as the base station 10A or the terminal 20 by controlling the variable unit 340 such as a variable phase shifter based on the control information received from the base station 10A or the terminal 20 without limiting the case to a case of estimating the propagation path information, H_{PT} and H_{RT}.

Here, the propagation path or the propagation channel is each of the communication paths of the wireless communication, and is a communication path between each of the transmission antennas and each of reception antennas (for example, base station antennas and terminal antennas in the figure).

As an example, the wireless relay device 30 includes: an antenna unit 350 including a small multi-element antenna corresponding to the massive MIMO; and a variable unit 340 including a variable phase shifter or a phase shifter that changes the phase of a wireless signal, which is substantially the radio waves, to a specific phase, and controls the phase of the radio waves to be relayed towards the terminal 20 or the base station 10A by using the variable unit 340.

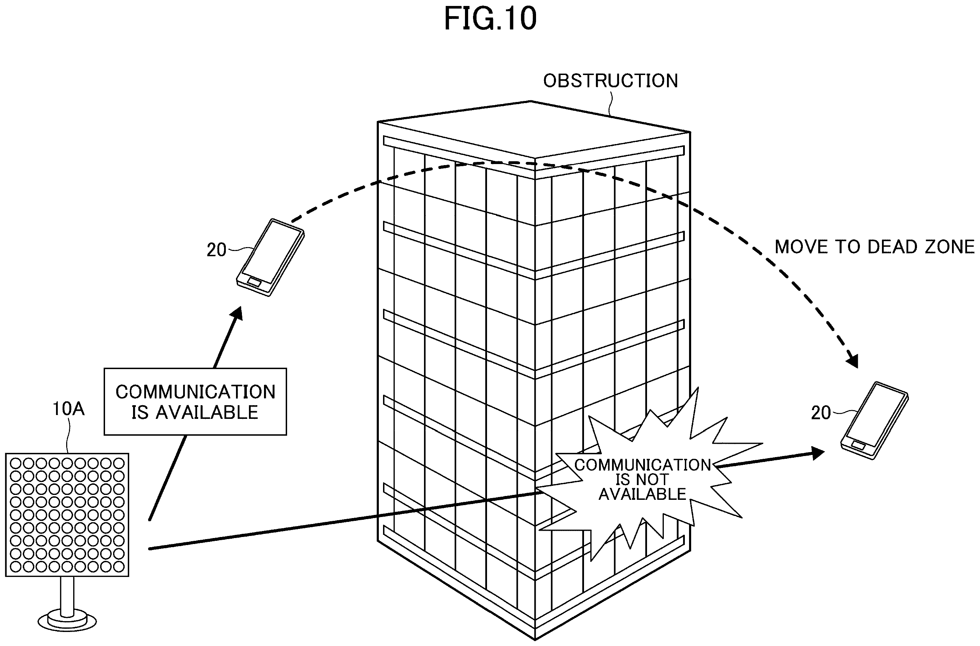

Fig. 10 is a drawing illustrating an example of a communication in the high frequency band. As illustrated in Fig. 10, in a case of using the high frequency band that is equal to or higher than several GHz to several dozens GHz, dead zones are easily created because of the radio waves' strong tendency of traveling straight. If the line of sight between the base station 10A and the terminal 20 is not blocked, the wireless communication between the base station 10A and the terminal 20 is not affected even in a case where the high frequency band is used. On the other hand, for example, if the line of sight between the base station 10A and the terminal 20 is blocked by an obstruction such as a building or a tree, the wireless quality is significantly degraded. In other words, when the terminal 20 moves to a dead zone in which the line of sight is blocked by an obstruction, the communication can be interrupted.

Considering the fact that there is an application that utilizes high data rate/high capacity and low latency characteristics, it is important to resolve the dead zones to ensure the connection between the base station and the terminal without a communication interruption within the wireless communication system.

Accordingly, technologies of the radio wave propagation control device such as an RIS or smart repeater that can relay the radio waves between the base station 10A and the terminal 20 are being developed. In this way, communication characteristics can be improved by controlling the propagation characteristics of the base station signals, and thus, the coverage enhancement without using a signal source and the reduction of the installation and deployment cost due to the addition of base stations can be achieved.

Conventionally, there are a passive type and an active type in the radio wave propagation control device. The passive type has an advantage of not requiring control information, but has a disadvantage of not being capable of following the mobile body, environment change, etc. On the other hand, the active type has a disadvantage of increased overhead requiring the control information, but has an advantage of being capable of variably controlling the propagation characteristics of the radio waves by changing the load (phase) state of the control antennas and capable of following the mobile body, environment change, etc.

There are two types including a feedback (FB) type and a propagation path information type in the active type radio wave propagation control device and control method. In the FB type, the variable type radio wave propagation control device searches an optimal condition by having the feedback of the communication state when the load (phase) state is randomly changed performed by the terminal 20, etc. On the other hand, in the propagation path information type, the optimal radio wave propagation control can be performed by determining the load state based on the propagation path information between the base station and the radio wave propagation control device. In an embodiment of the present invention, either type can be applied.

In addition, with respect to the relay method, there are types of reflection, transparent transmission, diffraction, collection, etc. In an embodiment of the present invention, as an example, configuration examples of a reflection type and a transparent transmission type will be described below (refer to Non-Patent Document 4 with respect to the diffraction type and the collection type).

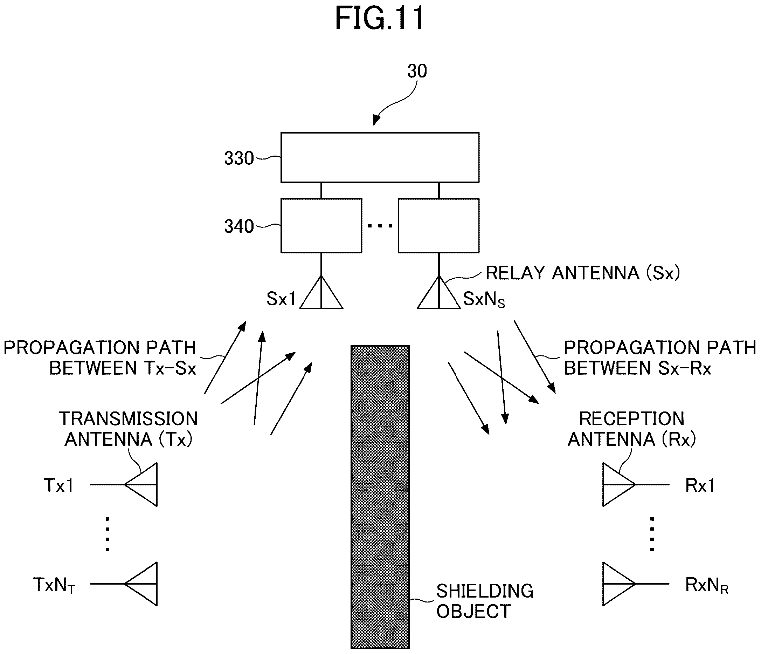

Fig. 11 is a drawing illustrating an example of a reflection type wireless relay device 30 in an embodiment of the present invention. Fig. 11 will be used for describing an example of a system structure of a reflection type wireless relay device 30. Fig. 11 is a drawing illustrating relationships among the transmission antenna Tx of the base station 10A or the like, the relay antenna Sx of the transparent transmission type wireless relay device 30, and the reception antenna Rx of the terminal 20 or the like. As illustrated in Fig. 7, in an embodiment of the present invention, MIMO is used as an example, there are multiple propagation paths between Tx and Sx and multiple propagation paths between Sx and Rx, and the wireless relay device 30 relays the radio waves by controlling the variable unit 340 that includes a variable phase shifter of the relay antenna Sx, or the like.

As illustrated in Fig. 11, in a case of the reflection type, the array-shaped relay antenna is arranged in a manner in which antennas face the same direction. According to the above, propagation paths of the relay antenna can be estimated based on the reception states that are observed when multiple phase conditions of the relay antenna are changed.

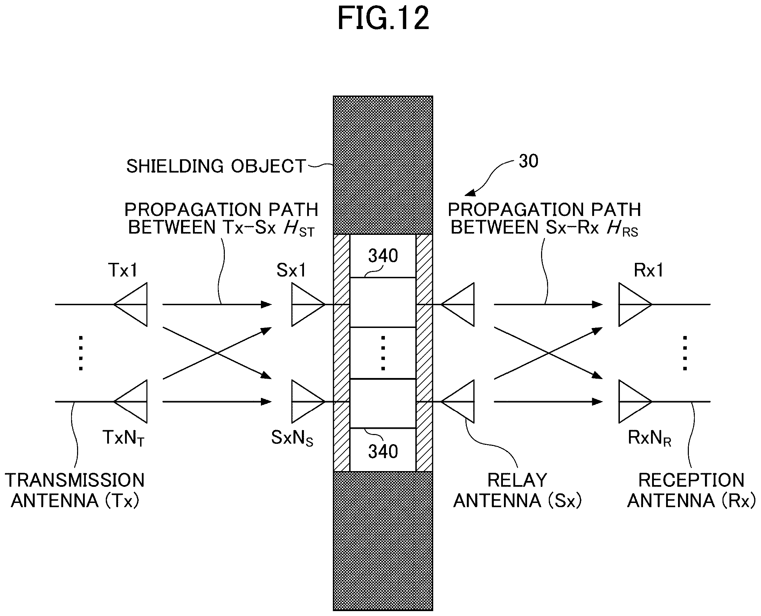

Fig. 12 is a drawing illustrating an example of a transparent transmission type wireless relay device 30 in an embodiment of the present invention. Fig. 12 will be used for describing an example of a system structure of a transparent transmission type wireless relay device 30. Fig. 12 is a drawing illustrating relationships among the transmission antenna Tx of the base station 10A or the like, the relay antenna Sx of the transparent transmission type wireless relay device 30, and the reception antenna Rx of the terminal 20 or the like. As illustrated in Fig. 8, in an embodiment of the present invention, MIMO is used as an example, there are multiple propagation paths between Tx and Sx and multiple propagation paths between Sx and Rx, and the wireless relay device 30 relays the radio waves received from one side to the other side via the variable unit 340 of the relay antenna Sx such as a variable phase shifter as illustrated in the figure. As described above, in a case of the transparent transmission type, reference antennas on the left side of the figure and relay antennas on the right side of the figure are arranged as pairs respectively facing the opposite directions in a manner in which the radio waves received from one side can be relayed to the other side. Regardless of the transparent transmission type or the reflection type, the reception state may be measured by detecting the power arrived at the relay antennas by using the power detection device, or the like. In addition, propagation paths of the relay antennas can be estimated based on the reception signals that are observed when multiple phase conditions of the relay antennas are changed.

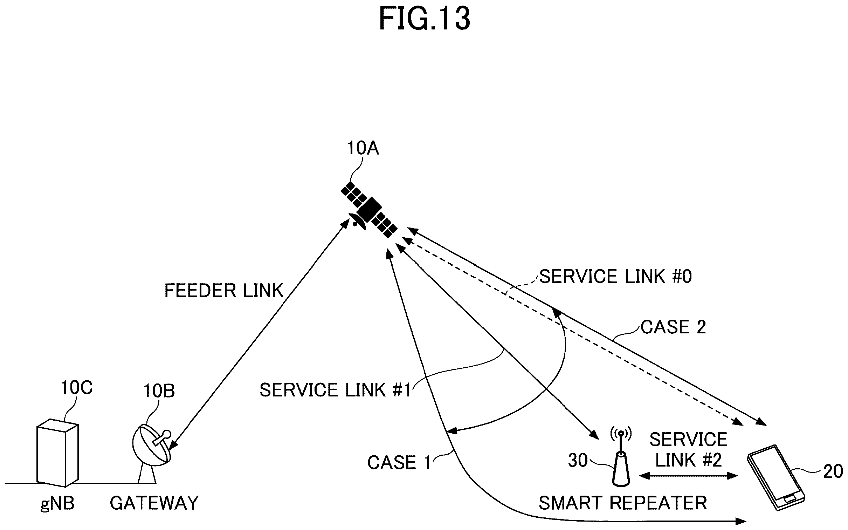

Fig. 13 is a drawing illustrating an example of a communication in an embodiment of the present invention. In the NTN that provides communications via a smart repeater 30, as illustrated in Fig. 13, an environment can be assumed in which there is a service link #0 that does not involve a smart repeater in addition to a service link #1 and a service link #2 that involve a smart repeater. A method of selecting an appropriate link and/or a method of indicating an appropriate link from among a case 1 that involves a smart repeater 30 and a case 2 that does not involve a smart repeater 30 are required to be discussed. For example, the terminal 20 or the base station 10 may select an appropriate link, based on DL, UL, channel, signal, priority, terminal type, or the like.

Option 1) Which link of the case 1 or the case 2 is to be used for transmission and reception of a signal may be indicated or determined based on the type of signal.

The terminal 20 may determine which of the case 1 or the case 2 is to be applied for transmitting and receiving a signal in accordance with the type of the signal to be transmitted and received.

For example, the terminal 20 may receive a DL signal by applying the case 2. For example, the terminal 20 may transmit a UL signal by applying the case 1. For example, the terminal 20 may transmit and receive a cell common signal by applying the case 2. For example, the terminal 20 may transmit and receive a UE-specific signal by applying the case 1. For example, the terminal 20 may transmit and receive a signal with a high priority by applying the case 1. For example, the terminal 20 may transmit and receive a signal with a low priority by applying the case 2.

It is to be noted that, similar to the terminal 20, the base station 10 and/or the smart repeater 30 may determine which of the case 1 or the case 2 is to be applied for transmitting and receiving a signal in accordance with the type of the signal to be transmitted and received.
Option 2) Which of the case 1 or the case 2 is to be applied for transmission and reception of a signal may be indicated or determined based on the configuration or indication by the base station 10.

The link used for transmission and reception of a signal may be configured or indicated to the terminal 20 by at least one of broadcast information, RRC (Radio Resource Control) signaling, MAC-CE (Medium Access Control - Control Element), or DCI (Downlink Control Information) from the base station 10.

For example, a link used for cell common signals may be broadcast in one of the cell common signals, and the link may be used for the subsequent transmission and reception of the cell common signals. The cell common signals may be PBCH, one of SIBs (System Information blocks) (SIB-X), or RAR (Random Access Response).

For example, in the TDD configuration, the base station 10 may configure or indicate, to the terminal 20, a link used for each of DL, UL, or flexible in addition to DL, UL, or flexible indicating the transmission direction for each slot and/or symbol. The configuration or the indication may be a semi-static configuration according to RRC signaling, or may be a dynamic indication according to SFI (Slot Format Indicator).

For example, the base station 10 may configure or indicate, to the terminal 20, a link used for at least one of the initial DL-BWP, the initial UL-BWP, the active DL-BWP, or the active UL-BWP of the terminal 20.

For example, the base station 10 may configure or indicate, to the terminal 20, a link used for DL or UL to be scheduled by scheduling DCI.

For example, the base station 10 may configure or indicate, to the terminal 20, a link used for the configured DL and/or the configured UL.

It is to be noted that, the terminal 20 in the option 2) may be replaced with the smart repeater 30. In other words, the link used for transmission and reception of a signal may be configured or indicated to the smart repeater 30 by at least one of broadcast information, RRC signaling, MAC-CE or DCI from the base station 10.
Option 3) Which of the case 1 or the case 2 is to be applied for transmission and reception of a signal may be indicated or determined based on the UE type (User Equipment Type). The indication or the determination based on the UE type may be performed by the terminal 20, may be performed by the base station 10, or may be performed by the smart repeater 30.

For example, in a case where the UE type is a high power UE or a VSAT (Very Small Aperture Terminal), the case 2 may be commonly applied to transmission and reception of a DL signal and a UL signal. For example, in a case where the UE type is a normal UE, the case 2 may be applied to reception of a DL signal and the case 1 may be applied to transmission of a UL signal. For example, in a case where the UE type is an IoT-UE, the case 2 may be commonly applied to transmission and reception of a DL signal and a UL signal.

It is to be noted that the UE type may be replaces with the UE capability or may be replaced with the UE category. The UE capability may be, for example, a power class, or may be a capability of whether or not to be a RedCap (Reduced capability). The UE category may be, for example, category M1, or may be category NB1.

It is to be noted that the above-described option 1), the above-described option 2), and the above-described option 3) may be combined to be used. For example, in a case where the configuration or indication according to the above-described option 2) is not performed, the above-described option 1) may be used. For example, the above-described option 1) may be used by the IoT-UE regardless of the configuration or the indication according to the above-described option 2), or the configuration or the indication according to the above-described option 2) is not required to be assumed.

According to an embodiment of the present invention, the terminal 20, the base station 10, or the smart repeater 30 can determine which of a link involving the smart repeater 30 or a link without involving the smart repeater 30 is to be used for transmission and reception of a predetermined signal in the NTN.

In other words, it is possible to determine a service link to be used in the NTN (Non-Terrestrial Network) system.

### (Hardware structure)

In the above block diagrams used for describing an embodiment of the present invention (Fig. 6, Fig. 7 and Fig. 8), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

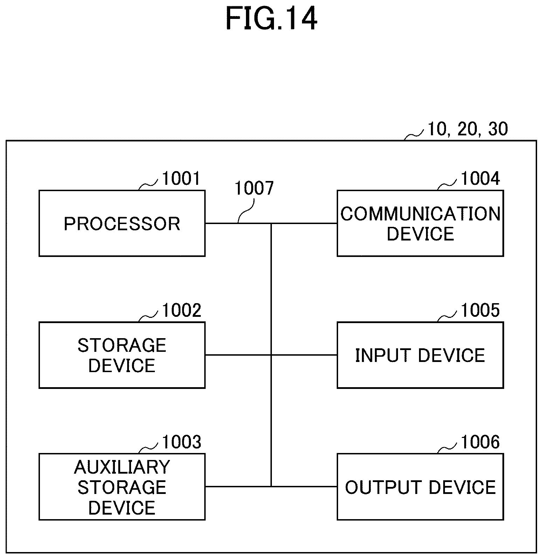

For example, the base station 10, the terminal 20, and the wireless relay device 30, etc., according to an embodiment of the present invention may function as a computer for processing the wireless communication method of the present disclosure. Fig. 14 is a drawing illustrating an example of hardware structures of the base station 10, the terminal 20 and the wireless relay device 30 according to an embodiment of the present invention. Each of the above-described base station 10, the terminal 20, and the wireless relay device 30 may be a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10, the terminal 20 and the wireless relay device 30 may include one or more of each of the devices illustrated in the figure, or may be configured without including some of the devices.

Each function in the base station 10, the terminal 20 and the wireless relay device 30 is implemented by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 2 may be realized by control programs that are stored in the storage device 1002 and are executed by the processor 1001. Further, for example, the control unit 240 of the terminal 20 illustrated in Fig. 3 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10, the terminal 20 and the wireless relay device 30 may include hardware such as a microprocessor, a digital signal processor (DSP), an ASIC (Application Specific Integrated Circuit), a PLD (Programmable Logic Device), an FPGA (Field Programmable Gate Array), etc., and a part or all of each functional block may be implemented by the hardware. For example, the processor 1001 may be implemented by at least one of the above hardware elements.

In addition, the wireless relay device 30 may include a variable phase shifter, phase shifter, amplifier, antenna, antenna array, or the like, as the hardware included in the variable unit 340 and the antenna unit 350 depending on the necessity.

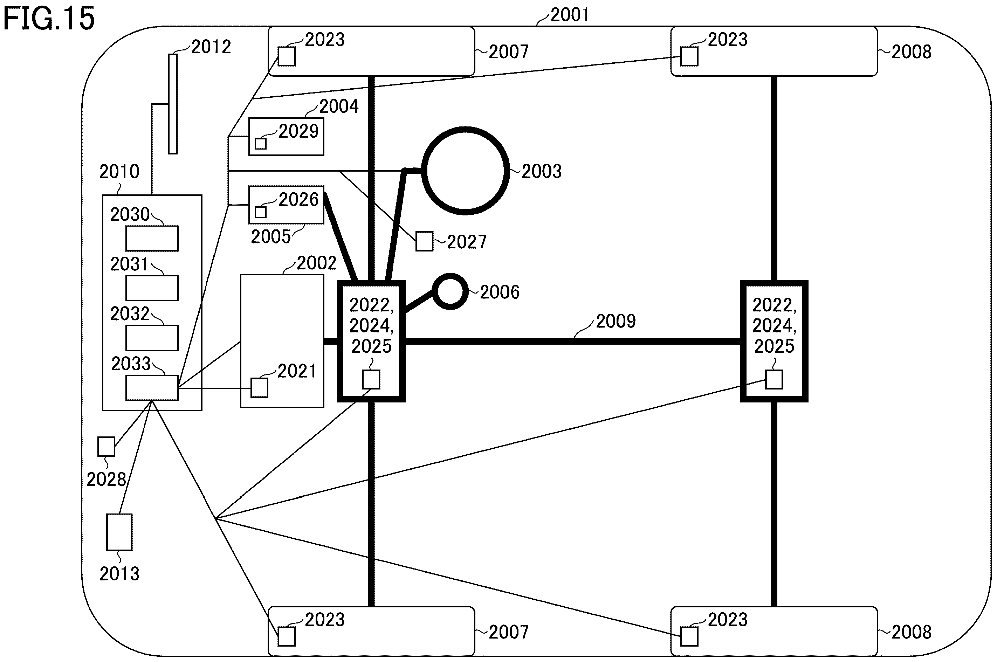

Fig. 15 shows an example of a configuration of a vehicle 2001. As shown in Fig. 15, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a communication unit configured to perform transmission and reception of a signal with a base station included in an NTN (Non-Terrestrial Network) via a non-terrestrial device; and a control unit configured to determine which of a first link directly connected to the terminal itself from the non-terrestrial device or a second link connected to the terminal itself from the non-terrestrial device via a wireless relay device is to be used for transmission or reception of the signal.

According to the above-described configuration, the terminal 20, the base station 10, or the smart repeater 30 can determine which of a link involving the smart repeater 30 or a link without involving the smart repeater 30 is to be used for transmission and reception of a predetermined signal in the NTN. In other words, it is possible to determine a service link to be used in the NTN (Non-Terrestrial Network) system.

The control unit may determine which of the first link or the second link is to be used for transmission or reception of the signal, based on a type of the signal. According to the above-described configuration, the terminal 20, the base station 10, or the smart repeater 30 can determine which of a link involving the smart repeater 30 or a link without involving the smart repeater 30 is to be used for transmission and reception of a predetermined signal in the NTN.

The control unit may determine to use the first link for reception of the signal in a case where the signal is a downlink signal and may determine to use the second link for transmission of the signal in a case where the signal is an uplink signal. According to the above-described configuration, the terminal 20, the base station 10, or the smart repeater 30 can determine which of a link involving the smart repeater 30 or a link without involving the smart repeater 30 is to be used for transmission and reception of a predetermined signal in the NTN.

The control unit may determine which of the first link or the second link is to be used for transmission or reception of the signal, based on information indicated by the base station. According to the above-described configuration, the terminal 20, the base station 10, or the smart repeater 30 can determine which of a link involving the smart repeater 30 or a link without involving the smart repeater 30 is to be used for transmission and reception of a predetermined signal in the NTN.

The control unit may determine which of the first link or the second link is to be used for transmission or reception of the signal, based on a UE type (User Equipment Type). According to the above-described configuration, the terminal 20, the base station 10, or the smart repeater 30 can determine which of a link involving the smart repeater 30 or a link without involving the smart repeater 30 is to be used for transmission and reception of a predetermined signal in the NTN.

In addition, according to an embodiment of the present invention, a communication method performed by a terminal is provided. The communication method includes: performing transmission and reception of a signal with a base station included in an NTN (Non-Terrestrial Network) via a non-terrestrial device; and determining which of a first link directly connected to the terminal itself from the non-terrestrial device or a second link connected to the terminal itself from the non-terrestrial device via a wireless relay device is to be used for transmission or reception of the signal.

According to the above-described configuration, the terminal 20, the base station 10, or the smart repeater 30 can determine which of a link involving the smart repeater 30 or a link without involving the smart repeater 30 is to be used for transmission and reception of a predetermined signal in the NTN. In other words, it is possible to determine a service link to be used in the NTN (Non-Terrestrial Network) system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Wireless relay device
310 Transmission unit
320 Reception unit
330 Control unit
340 Variable unit
350 Antenna unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a communication unit configured to perform transmission and reception of a signal with a base station included in an NTN (Non-Terrestrial Network) via a non-terrestrial device; and
a control unit configured to determine which of a first link directly connected to the terminal itself from the non-terrestrial device or a second link connected to the terminal itself from the non-terrestrial device via a wireless relay device is to be used for transmission or reception of the signal.

2. The terminal as claimed in claim 1, wherein
the control unit determines which of the first link or the second link is to be used for transmission or reception of the signal, based on a type of the signal.

3. The terminal as claimed in claim 2, wherein
the control unit determines to use the first link for reception of the signal in a case where the signal is a downlink signal and determines to use the second link for transmission of the signal in a case where the signal is an uplink signal.

4. The terminal as claimed in claim 1, wherein
the control unit determines which of the first link or the second link is to be used for transmission or reception of the signal, based on information indicated by the base station.

5. The terminal as claimed in claim 1, wherein
the control unit determines which of the first link or the second link is to be used for transmission or reception of the signal, based on a UE type (User Equipment Type).

6. A communication method performed by a terminal, the communication method comprising:
performing transmission and reception of a signal with a base station included in an NTN (Non-Terrestrial Network) via a non-terrestrial device; and
determining which of a first link directly connected to the terminal itself from the non-terrestrial device or a second link connected to the terminal itself from the non-terrestrial device via a wireless relay device is to be used for transmission or reception of the signal.
